# EUROPÄISCHE PATENTSCHRIFT

(11) **EP 1 423 251 B1**
(45) Veröffentlichungstag und Bekanntmachung des Hinweises auf die Patenterteilung: **19.07.2006**
(21) Anmeldenummer: 02729753.0
(22) Anmeldetag: 13.06.2002
(51) Int. Cl.: B29C 47/40, B29C 47/76, B29C 47/62

(54) **ENTGASUNG VON FLIESSFÄHIGEN MASSEN IN EINEM MEHRWELLENEXTRUDER**
DEGASSING OF FLOWABLE MASSES IN A MULTIPLE-SCREW EXTRUDER
DEGAZAGE DE MATIERES COULANTES DANS UNE EXTRUDEUSE A VIS MULTIPLES

(30) Priorität: 05.09.2001 DE 10143570
(43) Veröffentlichungstag der Anmeldung: 02.06.2004
(73) Patentinhaber: Bühler AG, 9240 Uzwil (CH)
(72) Erfinder: CHRISTEL, Andreas, CH-9524 Zuzwil (CH); STURM, Achim-Philipp, CH-9244 Niederuzwil (CH); INNEREBNER, Federico, CH-8049 Zürich (CH); SCHWEIKLE, Jürgen, CH-9527 Niederhelfenschwil (CH)
(74) Vertreter: Frommhold, Joachim
(86) Internationale Anmeldenummer: PCT/CH2002/000320
(87) Internationale Veröffentlichungsnummer: WO 2003/020493

(56) Entgegenhaltungen:
- EP-A- 0 788 868
- DE-A- 19 854 689
- US-A- 5 836 682

## Beschreibung

Die Erfindung bezieht sich auf einen Mehrwellenextruder und ein Verfahren zur Entgasung von viskosen oder viskoelastischen fliessfähigen Massen in einem Mehrwellenextruder mit mehreren Prozessräumen gemäss dem Oberbegriff von Anspruch 1 und gemäss Anspruch 18.

Bei der Entgasung viskoser Massen, wie z.B. Polyesterschmelzen, oder viskoelastischer Massen, wie z.B. Kautschukmischungen, in einem Mehrvvellenextruder verteilt sich die zu entgasende Masse je nach der Anordnung der mit Bearbeitungselementen ausgestatteten Wellen innerhalb des Mehrwellenextruders in der Regel auf mehrere Prozessräume.

Diese Prozessräume sind bei bekannten Mehrwellenextrudern und Verfahren der eingangs genannten Art zumindest abschnittsweise entlang der Extruderförderrichtung (Längsrichtung) entweder durch Wellen mit dichtkämmenden und sich gegenseitig abstreifenden Förderelementen voneinander getrennt, so dass in diesen Abschnitten im wesentlichen kaum ein Stoffaustausch (weder Gas noch Masse) zwischen benachbarten Prozessräumen stattfindet, oder sie sind durch Bereiche, in denen eine oder mehrere Wellen kein Bearbeitungselement aufweist, miteinander verbunden, so dass ein Stoffaustausch (Gas und Masse) zwischen den Prozessräumen stattfinden kann.

Bei Mehrwellenextrudern mit mehreren Prozessräumen, wie z.B. in der DE-A-198 54 689 offenbart, wurden bisher stets entweder dichtkämmende oder nicht-dichtkämmende Förderelemente verwendet, so dass man einerseits entweder eine abstreifende, selbstreinigende Wirkung benachbarter Wellen, allerdings praktisch ohne Stoffaustausch zwischen den Prozessräumen erzielte, oder andererseits einen nennenswerten Stoffaustausch zwischen den Prozessräumen, allerdings ohne die abstreifende, selbstreinigende Wirkung benachbarter Wellen erzielte. Dies ist besonders nachteilig, wenn sich derartige Bereiche mit Förderelementen im Bereich von Entgasungsöffnungen des Extruders befinden.

Der vorliegenden Erfindung liegt daher die Aufgabe zugrunde, bei einem Mehrwellenextruder mit mehreren Prozessräumen der eingangs genannten Bauart sowohl für eine selbstreinigende Wirkung der Förderelemente als auch für einen Stoffaustausch zwischen verschiedenen Prozessräumen, insbesondere im Bereich der Entgasungszonen zu sorgen.

Diese Aufgabe wird durch den Mehrwellenextruder gemäss Anspruch 1 und das Verfahren gemäss Anspruch 18 gelöst.

Weitere vorteilhafte Ausgestaltungen der Erfindung ergeben sich aus den Unteransprüchen.

Weitere Vorteile, Merkmale und Anwendungsmöglichkeiten der Erfindung ergeben sich aus der nun folgenden Beschreibung zweier Ausführungsbeispiele der vorliegenden Erfindung an Hand der beigefügten Zeichnung, wobei:
- Fig. 1: eine schematische Schnittansicht senkrecht zur Förder- bzw. Längsrichtung eines Ringextruders des Stands der Technik ist.
- Fig. 2: eine schematische Ansicht eines Ausschnitts der Anordnung der Wellen bei einem ersten Ausführungsbeispiel des erfindungsgemässen Mehrwellenextruders ist, wobei der erste Prozessraum unterhalb der Zeichenebene und der zweite Prozessraum oberhalb der Zeichenebene angeordnet ist.
- Fig. 3: eine Schnittansicht der Schnittebene III-III von Fig. 2 ist.
- Fig. 4: eine schematische Ansicht eines Ausschnitts der Anordnung der Wellen bei einem zweiten Ausführungsbeispiel des erfindungsgemässen Mehrwellenextruders ist, wobei der erste Prozessraum unterhalb der Zeichenebene und der zweite Prozessraum oberhalb der Zeichenebene angeordnet ist.
- Fig. 5: eine Schnittansicht der Schnittebene V-V von Fig. 4 ist.

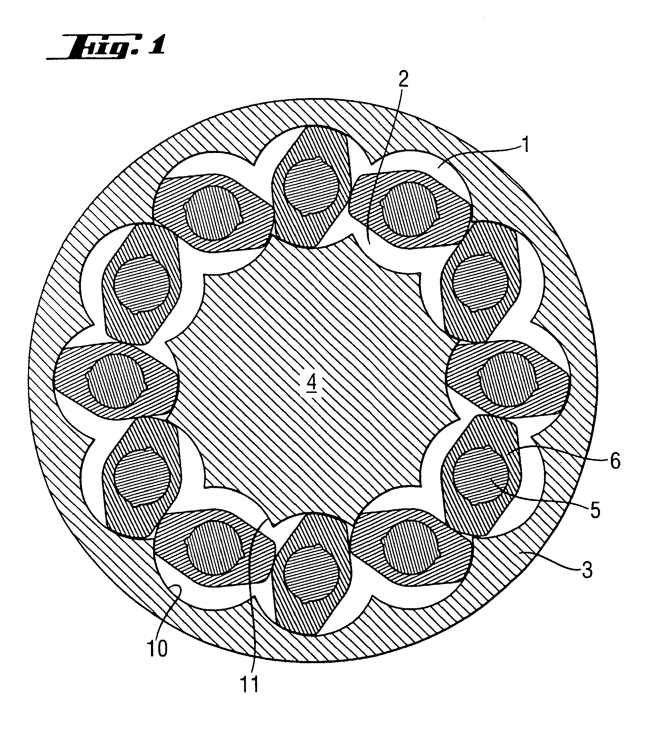

Fig. 1 ist eine Schnittansicht eines Ringextruders des Stands der Technik entlang einer Schnittebene senkrecht zur Förder- bzw. Längsrichtung des Extruders. Der Ringextruder besteht in diesem Fall aus 12 parallel zur Längs- bzw. Förderrichtung des Extruders kranzartig angeordneten Wellen 5, die jeweils ein zweigängiges Förderelement 6 tragen. Die 12 kranzartig angeordneten Wellen 5 sind dichtkämmend ausgebildet, so dass der äussere Prozessraum 1 des Ringextruders von dem inneren Prozessraum 2 des Ringextruders getrennt ist. Die kranzartig angeordneten Wellen 5 sind zwischen einem Gehäuse 3 und einem zu dem Gehäuse feststehenden Kern 4 gelagert. Die dem Wellenkranz zugewandte Fläche des Gehäuses 3 erscheint in der Querschnittsansicht als sogenannte äussere Blume 10. Die dem Wellenkranz zugewandte Fläche des Kerns 4 erscheint im Querschnitt als eine sogenannte innere Blume 11.

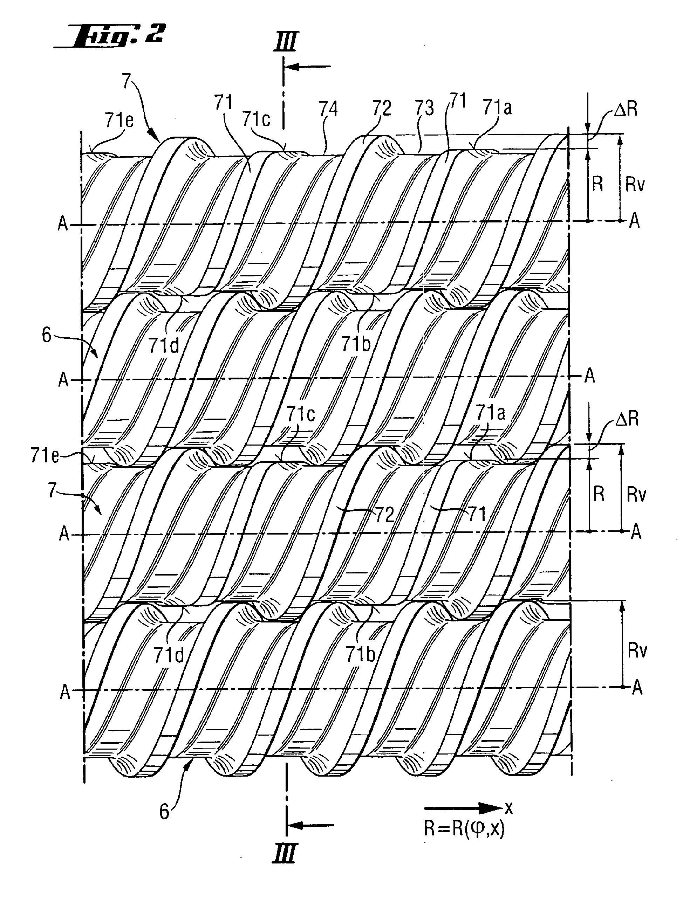

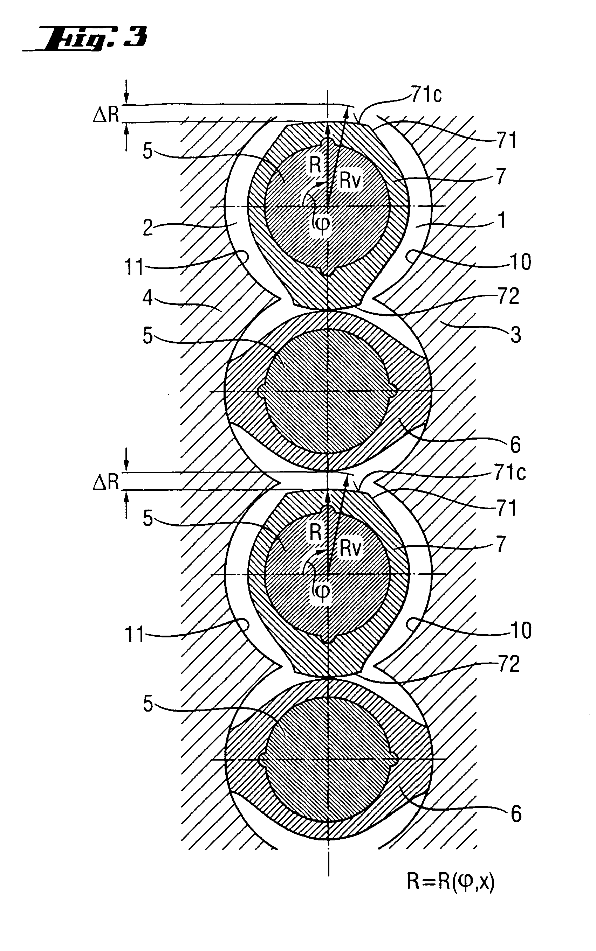

Fig. 2 ist eine schematische Ansicht eines Ausschnitts der Wellenanordnung bei einem ersten Ausführungsbeispiel des erfindungsgemässen Mehrwellenextruders, dessen Förderelemente 6, 7 jeweils als zweigängige Förderelemente ausgebildet sind. Um die Darstellung zu vereinfachen, wurden die dargestellten 4 Förderelemente nebeneinander in einer Ebene (Zeichenebene) liegend dargestellt. In Wirklichkeit können sie jedoch sowohl in einer Ebene als auch, wie z.B. beim Ringextruder, kranzartig auf einer Zylinderfläche angeordnet sein. Die Förderelemente 6, 7 sind zweigängige Förderelemente, wobei abwechselnd zweigängige Förderelemente 6 ohne Kappung und zweigängige Förderelemente 7 mit Kappung aufeinanderfolgen. Die Kappung bei den gekappten zweigängigen Förderelementen 7 besteht darin, dass beim ersten Steg 71 in Teilbereichen 71a, 71b, 71c, 71 d und 71 e des ersten Stegs 71 dieser Steg um einen Betrag ΔR gekappt ist, so dass in diesen Bereichen der Radius R um einen Differenzbetrag ΔR gegenüber dem Vollradius Rv verringert ist. Im vorliegenden Fall sind die gekappten Bereiche 71a, 71b, 71c, 71 d und 71 e des ersten Stegs 71 jeweils um 180° entlang der Umfangsrichtung des Förderelements 7 versetzt, wobei der zweite Steg 72 ohne Kappung verbleibt. Dies ermöglicht beim Betrieb des Extruders sowohl einen Stoffaustausch entlang der Längsrichtung A zwischen den beiden benachbarten Gängen 73 und 74 des Förderelements 7 als auch einen Stoffaustausch zwischen dem ersten Prozessraum 1 (Fig. 3) und dem zweiten Prozessraum 2 (Fig. 3) des Extruders. Über die Durchlass-Teilbereiche 71 a, 71 b, 71c, 71 d und 71 e findet beim Betrieb des Extruders ein Stoffaustausch statt. Dabei kann sowohl Gas als auch geschmolzene Masse vom ersten Prozessraum 1 in den zweiten Prozessraum 2 überwechseln.

Fig. 3 ist eine Schnittansicht der Schnittebene III-III von Fig. 2, wobei hier zusätzlich das Gehäuse 3 und der Kern 4 des Extruders abgebildet sind. Die benachbarten Wellen sind jeweils eine Durchlasswelle und eine gewöhnliche Welle, wobei auf dem Wellendorn 5 der Durchlasswelle ein zweigängiges Förderelement 7 drehfest angebracht ist, bei dem ein Steg in einem Teilbereich um einen Betrag ΔR gegenüber dem Vollradius Rv gekappt ist, während auf der gewöhnlichen Welle 5 ein gewöhnliches Förderelement 6 ohne Kappung, das heisst mit durchgehend vollem Radius Rv drehfest angebracht ist.

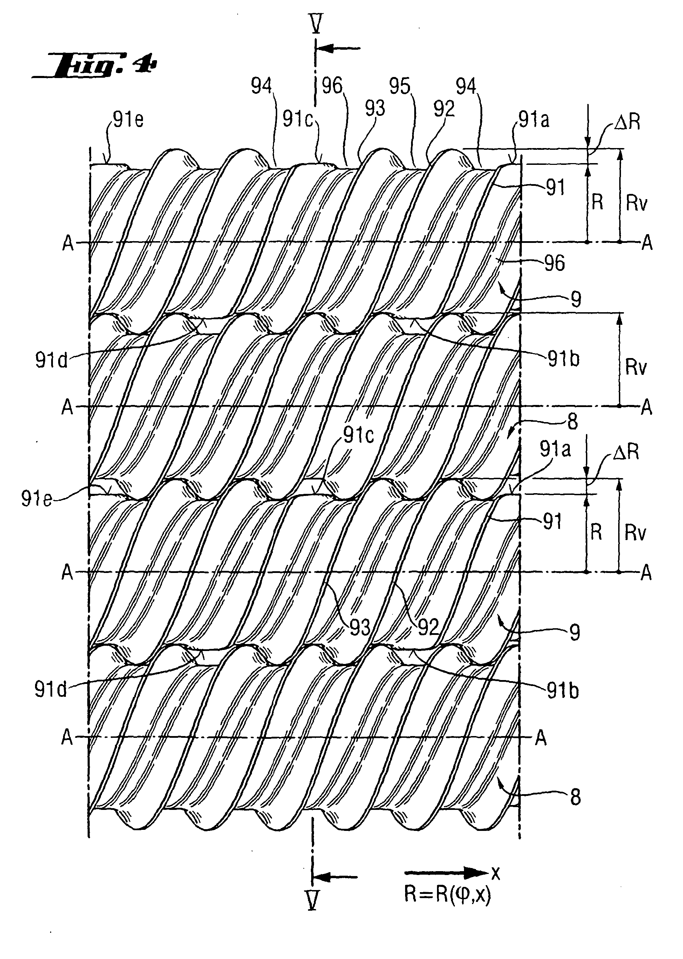

Fig. 4 ist eine schematische Ansicht eines Ausschnitts der Wellenanordnung bei einem zweiten Ausführungsbeispiel des erfindungsgemässen Mehrwellenextruders. Anstelle der zweigängigen Förderelemente 6, 7 von Fig. 2 handelt sich hier jedoch um dreigängige Förderelemente 8, 9. Auch hier sind Durchlasswellen abwechselnd mit gewöhnlichen Wellen angeordnet. Während die Wellendorne 5 der gewöhnlichen Wellen Förderelemente 8 ohne jegliche Kappung tragen, tragen die Wellendorne 5 der Durchlasswellen Förderelemente 9 mit einer teilweisen Kappung. Das dreigängige Förderelement 9 besitzt einen ersten Steg 91, einen zweiten Steg 92 und einen dritten Steg 93, zwischen denen ein erster Gang 94, ein zweiter Gang 95 und ein dritter Gang 96 ausgebildet sind. Im vorliegenden Fall ist der erste Steg 91 des Förderelements 9 in Teilbereichen 91 a, 91 b, 91 c, 91 d und 91 e des ersten Stegs 91 um einen Betrag ΔR gegenüber dem Vollradius Rv gekappt. Auch hier sind die gekappten Teilbereiche des ersten Stegs 91 entlang der Umfangsrichtung des Förderelements 9 jeweils um 180° zueinander versetzt. Auch hier wird durch die Verbindungsöffnungen 91 a, 91 b,91 c, 91d und 91 e sowohl ein Stoffaustausch entlang der Längsrichtung A zwischen dem Gang 94 und dem Gang 96 des Förderelements 9 als auch zwischen dem ersten Prozessraum 1 (unterhalb der Zeichenebene) und dem zweiten Prozessraum 2 (oberhalb der Zeichenebene) ermöglicht.

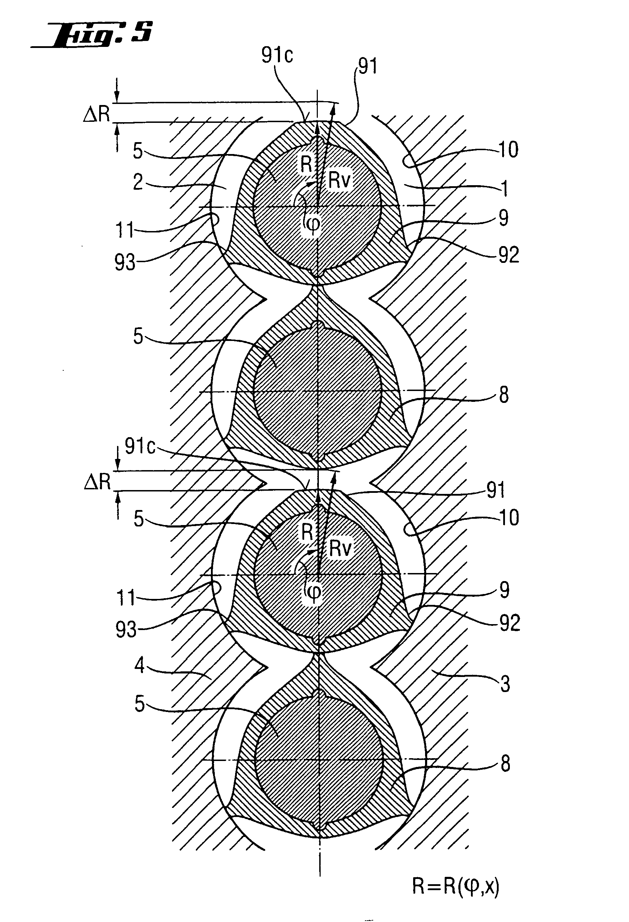

Fig. 5 ist eine Schnittansicht der Schnittebene V-V von Fig. 4. Fig. 5 entspricht im wesentlichen Fig. 3, wobei lediglich die zweigängigen Förderelemente 6 (ohne Kappung) und 7 (mit Kappung) durch dreigängige Förderelemente 8 (ohne Kappung) bzw. 9 (mit Kappung) ersetzt sind. Sämtliche weiteren Bezugsziffern bzw. Elemente der Fig. 5 entsprechen denselben Bezugsziffern bzw. Elementen der Fig. 3.

Um bei dem zweiten Ausführungsbeispiel (Fig. 4 und 5) ebenfalls einen Stoffaustausch zwischen allen Gängen 94, 95 und 96 entlang der Längsrichtung A zu ermöglichen, müsste man zusätzlich zum Steg 91 auch noch den Steg 92 oder Steg 93 zumindest in einem Teilbereich kappen.

Je nach den Eigenschaften der zu behandelnden viskosen oder viskoelastischen Masse können die gekappten Bereiche 71a, 71 b, 71 c, 71d und 71 e des ersten Stegs 71 des zweigängigen Förderelements 7 sich auch über einen grösseren Bereich entlang der Umfangsrichtung erstrecken.

Dasselbe gilt auch für die gekappten Bereiche 91 a, 91 b, 91 c, 91 d und 91 e des ersten Stegs 91 der dreigängigen Förderelemente 9 des zweiten Ausführungsbeispiels (Fig. 4 und 5). Auch hier können sich die gekappten Bereiche des ersten Stegs 91 über einen grösseren Umfangsbereich des dreigängigen Förderelements 9 erstrecken. Im Extremfall kann auch z.B. der erste Steg 91 des dreigängigen Förderelements 9 vollständig entfernt sein.

Sowohl bei dem ersten als auch dem zweiten Ausführungsbeispiel mit zweigängigen bzw. dreigängigen Förderelementen ist es nicht unbedingt notwendig, dass jeweils gekappte Förderelemente 7 bzw. 9 abwechselnd mit nicht-gekappten Förderelementen 6 bzw. 8 aufeinanderfolgen. So könnten z.B. sämtliche Förderelemente teilweise gekappt sein oder aber nur jedes dritte oder gar jedes vierte etc. Förderelement der nebeneinander angeordneten Wellen gekappt sein.

In den Figuren lässt sich die Radiusdifferenz ΔR bzw. der Radius R des Förderelementes formal als Funktion R (ϕ, x) vom Umfangswinkel ϕ entlang der Umfangsrichtung des Förderelementes und vom axialen Ort x entlang der axialen Längsrichtung des Förderelementes beschreiben.

### Bezugszeichenliste

- 1: äusserer Prozessraum
- 2: innerer Prozessraum
- 3: Gehäuse
- 4: Kern
- 5: Wellendorn
- 6: zweigängiges Förderelement ohne Kappung
- 7: zweigängiges Förderelement mit Kappung
- 8: dreigängiges Förderelement ohne Kappung
- 9: dreigängiges Förderelement mit Kappung
- 10: äussere Blume
- 11: innere Blume
- 71: erster Steg
- 72: zweiter Steg
- 73: erster Gang
- 74: zweiter Gang
- 71a: gekappter Teilbereich des ersten Stegs / Durchlass-Teilbereich
- 71b: gekappter Teilbereich des ersten Stegs / Durchlass-Teilbereich
- 71c: gekappter Teilbereich des ersten Stegs / Durchlass-Teilbereich
- 71d: gekappter Teilbereich des ersten Stegs / Durchlass-Teilbereich
- 71e: gekappter Teilbereich des ersten Stegs / Durchlass-Teilbereich
- 91: erster Steg
- 92: zweiter Steg
- 93: dritter Steg
- 94: erster Gang
- 95: zweiter Gang
- 96: dritter Gang
- 91a: gekappter Teilbereich des ersten Stegs / Durchlass-Teilbereich
- 91b: gekappter Teilbereich des ersten Stegs / Durchlass-Teilbereich
- 91c: gekappter Teilbereich des ersten Stegs / Durchlass-Teilbereich
- 91d: gekappter Teilbereich des ersten Stegs / Durchlass-Teilbereich
- 91e: gekappter Teilbereich des ersten Stegs / Durchlass-Teilbereich
- A: Längsachse der Wellen / Förder- bzw. Längsrichtung

## Patentansprüche

1. Mehrwellenextruder, insbesondere Ringextruder, mit mehreren zueinander parallel, insbesondere kranzartig, angeordneten Wellen (5, 6; 5, 8) mit Bearbeitungselementen (6; 8), die entlang der axialen Förderrichtung des Extruders mindestens abschnittsweise als dichtkämmende, mindestens zweigängige Förderelemente (6; 8) mit einem Steg pro Gang ausgebildet sind, wobei der Prozessraum (1, 2) des Extruders in diesen Abschnitten durch die Wellen (5, 6; 5, 8) mit den dichtkämmenden Förderelementen (6; 8) in einen ersten Prozessraum (1) und einen zweiten Prozessraum (2) unterteilt ist, und wobei in den Entgasungszonen mindestens der erste Prozessraum (1) mit mindestens einer Entgasungsöffnung versehen ist, **dadurch gekennzeichnet, dass** bei mindestens einem Förderelement (7; 9) mindestens einer als Durchlass-Welle ausgebildeten Welle (5, 7; 5, 9) in einem als Durchlass-Bereich (71a, ..., 71e; 91a, ..., 91e) ausgebildeten Bereich entlang der Umfangsrichtung des mindestens einen Förderelements (7; 9) der Radius R des Förderelements um ΔR kleiner als der zum gegenseitigen Abstreifen von anhaftendem Produkt beim dichtkämmenden Betrieb mit den benachbarten Förderelementen (6; 8) benachbarter gewöhnlicher Wellen (5, 6; 5, 8) dienende notwendige Vollradius Rv des Förderelements (6; 8) ist.

2. Mehrwellenextruder nach Anspruch 1, **dadurch gekennzeichnet, dass** der Radius R des Förderelements in den Entgasungszonen des Extruders um ΔR kleiner als der Vollradius Rv ist.

3. Mehrwellenextruder nach Anspruch 1 oder 2, **dadurch gekennzeichnet, dass** der als Durchlass-Bereich (71a, ..., 71e; 91a, ..., 91e) ausgebildete Bereich entlang der Umfangsrichtung des mindestens einen Förderelements (7; 9) ein Teilbereich entlang der Umfangsrichtung dieses Förderelements ist.

4. Mehrwellenextruder nach einem der vorhergehenden Ansprüche, **dadurch gekennzeichnet, dass** die Radiusdifferenz ΔR des Förderelements eine Funktion des Umfangswinkels ϕ entlang der Umfangsrichtung des Förderelements und eine Funktion des axialen Orts x entlang der axialen Längsrichtung des Förderelements ist.

5. Mehrwellenextruder nach Anspruch 4, **dadurch gekennzeichnet, dass** die Radiusdifferenz ΔR des Förderelements eine über einen vollen Umfang (0 < ϕ < 360°) des Förderelements symmetrische Funktion des Umfangswinkels ϕ ist.

6. Mehrwellenextruder nach einem der Ansprüche 3 bis 5, **dadurch gekennzeichnet, dass** der Teilbereich die Oberfläche mindestens eines Steges der Stege (71, 72; 91, 92, 93) des Förderelements ist.

7. Mehrwellenextruder nach einem der Ansprüche 3 bis 6, **dadurch gekennzeichnet, dass** der Teilbereich die Oberfläche mindestens einer Flanke der Flanken des Förderelements ist.

8. Mehrwellenextruder nach einem der Ansprüche 3 bis 7, **dadurch gekennzeichnet, dass** der Teilbereich die Oberfläche mindestens eines Kembereichs der Kembereiche des Förderelements ist.

9. Mehrwellenextruder nach einem der vorhergehenden Ansprüche, **dadurch gekennzeichnet, dass** die mehreren zueinander parallelen Wellen abwechselnd Durchlass-Wellen (5, 7; 5, 9) und gewöhnliche Wellen (5, 6; 5, 8) sind.

10. Mehrwellenextruder nach einem der vorhergehenden Ansprüche, **dadurch gekennzeichnet, dass** der einen gegenüber dem Vollradius Rv kleineren Radius R aufweisende Teilbereich des Förderelements einer Durchlass-Welle (5, 7; 5, 9) ein Steg (71; 91) des Förderelements (7; 9) ist.

11. Mehrwellenextruder nach einem der vorhergehenden Ansprüche, **dadurch gekennzeichnet, dass** die mittels des Durchlass-Teilbereichs (71a, ..., 71e; 91a, ..., 91e) eines Förderelements (7; 9) einer Durchlass-Welle (5, 7; 5, 9) nicht abstreifbaren Teilbereiche der Förderelemente (6; 8) einer gewöhnlichen Welle (5, 6; 5, 8) durch andere Vollradius-Umfangsteilbereiche desselben Förderelements der Durchlass-Welle abstreifbar sind.

12. Mehrwellenextruder nach einem der vorhergehenden Ansprüche, **dadurch gekennzeichnet, dass** der Mehrwellenextruder ein Ringextruder mit kranzartigen, insbesondere kreisartig angeordneten parallelen Wellen (5) ist, wobei der erste Prozessraum der Aussenraum (1) und der zweite Prozessraum der Innenraum (2) des Ringextruder-Prozessraums (1, 2) ist.

13. Mehrwellenextruder nach einem der vorhergehenden Ansprüche, **dadurch gekennzeichnet, dass** das Förderelement (7; 9) mit dem Durchlass-Teilbereich (71 a, ..., 71e; 91a, ..., 91e) ein n-gängiges Förderelement (7; 9) ist, bei dem jeweils der Radius von höchstens n-1 Stegen ein kleinerer Radius als der Vollradius Rv ist und der Radius von mindestens einem Steg der Vollradius Rv ist.

14. Mehrwellenextruder nach Anspruch 13, **dadurch gekennzeichnet, dass** das Förderelement (7; 9) mit dem Durchlass-Teilbereich (71a, ..., 71e; 91a, ..., 91e) ein zweigängiges Förderelement ist, bei dem der Radius des ersten Stegs ein kleinerer Radius als der Vollradius Rv ist und der Radius des zweiten Stegs der Vollradius Rv ist.

15. Mehrwellenextruder nach Anspruch 14, **dadurch gekennzeichnet, dass** aufeinanderfolgende Durchlass-Wellen (5, 7; 5, 9), die beiderseits einer zwischen ihnen angeordneten gewöhnlichen Welle (5, 6; 5, 8) angeordnet sind, derart ausgelegt sind, dass bei ihrer Drehung um ihre Längsachse A der jeweilige Durchlass-Teilbereich (71a, ..., 71e; 91a, ..., 91e) eines Förderelements in Umfangsrichtung um etwa 180° zum entsprechenden Durchlass-Teilbereich (71a, ..., 71e; 91a, ..., 91e) der folgenden Durchlass-Welle winkelmässig versetzt ist.

16. Mehrwellenextruder nach einem der vorhergehenden Ansprüche, **dadurch gekennzeichnet, dass** in einer Entgasungszone jeweils mindestens im Bereich der Entgasungsöffnung des Extrudergehäuses keine Durchlass-Förderelemente (7; 9), d.h. nur dichtkämmende Förderelemente (6; 8) angeordnet sind.

17. Mehrwellen-Extruder nach einem der vorhergehenden Ansprüche, **dadurch gekennzeichnet, dass** das Durchlass-Förderelement (7; 9) mit dem Durchlass-Teilbereich (71a, ..., 71e; 91a, ..., 91e) entlang seiner Umfangsrichtung derart ausgebildet ist, dass an dem Durchlass-Förderelement (7; 9) haftende viskose oder viskoelastische Masse durch das sich drehende Durchlass-Förderelement in zyklischer Weise zu einem dünnen Film auseinandergezogen werden kann.

18. Verfahren zur Entgasung von viskosen oder viskoelastischen fliessfähigen Massen in einem Mehrwellenextruder mit mehreren Prozessräumen (1, 2), die voneinander jeweils durch mehrere zueinander parallel angeordnete Wellen (5, 6; 5, 8) mit im wesentlichen dichtkämmenden Förderelementen (6; 8) getrennt sind, wobei mindestens einer der Prozessräume (1, 2) mindestens eine Entgasungszone mit einer Entgasungsöffnung aufweist und jeder der Prozessräume (1, 2) teilweise mit der zu entgasenden Masse gefüllt ist, die mittels der Förderelemente der den jeweiligen Prozessraum begrenzenden Wellen (5, 6; 5, 8) in jedem Prozessraum (1, 2) bearbeitet und durch diese Prozessräume hindurch befördert wird, **dadurch gekennzeichnet, dass** zwischen den jeweiligen Prozessräumen (1, 2) über mindestens eine Verbindungsöffnung (71a, ..., 71e; 91a, ..., 91e) ein Stoffaustausch zwischen dem ersten Prozessraum (1) und dem zweiten Prozessraum (2) stattfindet.

19. Verfahren nach Anspruch 13, **dadurch gekennzeichnet, dass** der Mehrwellenextruder einen ersten Prozessraum und einen zweiten Prozessraum, der von dem ersten Prozessraum durch mehrere zueinander parallel angeordnete Wellen mit im wesentlichen dichtkämmenden Förderelementen getrennt ist, aufweist.

20. Verfahren nach Anspruch 18 oder 19, **dadurch gekennzeichnet, dass** sich die Verbindungsöffnung während des Betriebs des Mehrwellenextruders ständig verändert.

21. Verfahren nach Anspruch 20, **dadurch gekennzeichnet, dass** die Veränderung der Verbindungsöffnung darin besteht, dass sich die Verbindungsöffnung im Bereich der Entgasungszone entlang der Längsrichtung A zyklisch hin und her bewegt.

22. Verfahren nach Anspruch 20 oder 21, **dadurch gekennzeichnet, dass** die Veränderung der Verbindungsöffnung darin besteht, dass sich die Ausdehnung der Verbindungsöffnung zyklisch vergrössert und verkleinert.

23. Verfahren nach einem der Ansprüche 18 bis 22, **dadurch gekennzeichnet, dass** an dem Durchlass-Förderelement haftende viskose oder viskoelastische Masse durch das sich drehende Durchlass-Förderelement mit seiner sich zyklisch bzw. periodisch aufweitenden und verkleinernden Verbindungsöffnung in zyklischer Weise so weit und so schnell geöffnet wird, dass der Spalt nur zum Teil mit Produkt gefüllt ist.

24. Verfahren nach Anspruch 22 oder 23, **dadurch gekennzeichnet, dass** die zyklische bzw. periodische Vergrösserung und Verkleinerung der Verbindungsöffnung derart erfolgt, dass die Masse im Bereich der Verbindungsöffnung zu einem dünnen Film auseinandergezogen und über mindestens einem Teilbereich der Verbindungsöffnung aufgespannt und anschliessend zerstört wird.

25. Verfahren nach einem der Ansprüche 22 bis 24, **dadurch gekennzeichnet, dass** die zyklische bzw. periodische Vergrösserung und Verkleinerung der Verbindungsöffnung derart erfolgt, dass die Masse im Bereich der Verbindungsöffnung von dem einen Prozessraum in den anderen Prozessraum überwechselt, wobei die Oberfläche des Materials zyklisch vergrössert und verkleinert wird.

26. Verfahren nach Anspruch 24 oder 25, **dadurch gekennzeichnet, dass** die Zerstörung des dünnen Films durch Filmriss aufgrund des ausreichend schnellen Auseinanderziehens des Filmes erfolgt.

27. Verfahren nach einem der Ansprüche 24, 25 oder 26, **dadurch gekennzeichnet, dass** die Zerstörung des dünnen Films durch Filmriss aufgrund des Druckunterschieds zwischen den Prozessräumen beiderseits der Verbindungsöffnung erfolgt.

28. Verfahren nach einem der Ansprüche 18 bis 27, **dadurch gekennzeichnet, dass** die Verbindungsöffnung eine schlitzartige Öffnung ist und die zyklische Vergrösserung bzw. Verkleinerung der Verbindungsöffnung erzeugt wird, indem die gegenüberliegenden längeren Randbereiche des Schlitzes zyklisch voneinander weg bzw. aufeinander zu bewegt werden.

29. Verfahren nach einem der Ansprüche 18 bis 28, **dadurch gekennzeichnet, dass** es auf einem Mehrwellen-Extruder gemäss einem der Ansprüche 1 bis 12 durchgeführt wird, wobei das zyklische voneinander weg und aufeinander zu Bewegen der Randbereiche der mindestens einen Verbindungsöffnung durch die Drehung des mindestens einen Förderelements (7; 9) mit seinem Durchlass-Teilbereich (71a, ..., 71e; 91a, ..., 91e) hervorgerufen wird.

## Claims

1. A multi-screw extruder, in particular ring extruder, with several screws (5, 6; 5, 8) arranged parallel to each other, in particular like a collar, with processing elements (6; 8) designed at least sectionally along the axial conveying direction of the extruder as tightly intermeshing, at least two-start conveying elements (6; 8) with one web per flight, wherein the processing area (1, 2) of the extruder is divided in these sections by the screws (5, 6; 5, 8) with the tightly intermeshing conveying elements (6; 8) into a first processing area (1) and a second processing area (2), and wherein at least the first processing area (1) is provided with at least one degassing opening in the degassing zones, **characterized in that**, in at least one conveying element (7; 9) of at least one screw (5, 7; 5, 9) designed as a throughput screw, the radius R of the conveying element in an area designed as a throughput area (71a, ..., 71e; 91a, ..., 91e) along the circumferential direction of the at least one conveying element (7; 9) is ΔR smaller than the necessary full radius Rv of the conveying element (6; 8) used for mutually stripping adhering product during tightly intermeshing operation with the adjacent conveying elements (6; 8) of adjacent conventional screws (5, 6; 5, 8)

2. The multi-screw extruder according to claim 1, **characterized in that** the radius R of the conveying element in the degassing zones of the extruder is ΔR smaller than the full radius Rv.

3. The multi-screw extruder according to claim 1 or 2, **characterized in that**, along the circumferential direction of the at least one conveying element (7; 9), the area designed as a throughput area (71a, ..., 71e; 91a, ..., 91e) is a partial area along the circumferential direction of this conveying element.

4. The multi-screw extruder according to one of the preceding claims, **characterized in that** the radius difference ΔR of the conveying element is a function of the angle at circumference ϕ along the circumferential direction of the conveying element and a function of the axial location x along the axial longitudinal direction of the conveying element.

5. The multi-screw extruder according to claim 4, **characterized in that** the radius difference ΔR of the conveying element is a symmetrical function of the angle at circumference ϕ over a full circumference (0 < ϕ < 360°) of the conveying element.

6. The multi-screw extruder according to one of claims 3 to 5, **characterized in that** the partial area is the surface of at least one web of the webs (71, 72; 91, 92, 93) of the conveying element.

7. The multi-screw extruder according to one of claims 3 to 6, **characterized in that** the partial area is the surface of at least one flank of the flanks of the conveying element.

8. The multi-screw extruder according to one of claims 3 to 7, **characterized in that** the partial area is the surface of at least one core area of the core areas of the conveying element.

9. The multi-screw extruder according to one of the preceding claims, **characterized in that** the several mutually parallel screws alternate between throughput screws (5, 7; 5, 9) and conventional screws (5, 6; 5, 8).

10. The multi-screw extruder according to one of the preceding claims, **characterized in that** the partial area of the conveying element of a throughput screw (5, 7; 5, 9) having a smaller radius R relative to the full radius Rv is a web (71; 91) of the conveying element (7; 9).

11. The multi-screw extruder according to one of the preceding claims, **characterized in that** the partial areas of the conveying elements (6; 8) of a conventional screw (5, 6; 5, 8) that cannot be stripped via the partial throughput area (71a, ..., 71e; 91a, ..., 91e) of a conveying element (7; 9) of a throughput screw (5, 7; 5, 9) can be stripped by other full radius partial circumferential areas of the same conveying element of the throughput screw.

12. The multi-screw extruder according to one of the preceding claims, **characterized in that** the multi-screw extruder is a ring extruder with parallel screws (5) arranged like a collar, in particular like a circle, wherein the first processing area is the outer area (1) and the second processing area is the inner area (2) of the ring extruder processing area (1, 2).

13. The multi-screw extruder according to one of the preceding claims, **characterized in that** the conveying element (7; 9) with the partial throughput area (71a, ..., 71e; 91a, ..., 91e) is an n-start conveying element (7; 9), in which the respective radius of at most n-1 webs is a smaller radius than the full radius Rv, and the radius of at least one web is the full radius Rv.

14. The multi-screw extruder according to claim 13, **characterized in that** the conveying element (7; 9) with the partial throughput area (71a, ..., 71e; 91a, ..., 91e) is a two-start conveying element, in which the radius of the first web is a smaller radius than the full radius Rv, and the radius of the second web is the full radius Rv.

15. The multi-screw extruder according to claim 14, **characterized in that** consecutive throughput screws (5, 7; 5, 9) arranged on either side of a conventional screw (5, 6; 5, 8) situated between them are designed in such a way that, as they turn around their longitudinal axis, the respective partial throughput area (71a, ..., 71e; 91a, ..., 91e) of a conveying element is angularly offset by about 180° in the circumferential direction relative to the corresponding partial throughput area (71a, ..., 71e; 91a, ..., 91e) is of the following throughput screw.

16. The multi-screw extruder according to one of the preceding claims, **characterized in that** no throughput conveying elements (7; 9), i.e., only tightly intermeshing conveying elements (6; 8), are arranged in a degassing zone at least in the respective area of the degassing opening of the extruder casing.

17. The multi-screw extruder according to one of the preceding claims, **characterized in that** the throughput conveying element (7; 9) with the partial throughput area (71a, ..., 71e; 91a, ..., 91e) is designed along its circumferential direction in such a way that viscous or viscoelastic compound adhering to the throughput conveying element (7; 9) can be cyclically stretched apart to form a think film by the rotating throughput conveying element.

18. A method for degassing viscous or viscoelastic free-flowing compounds in a multi-screw extruder with several processing areas (1, 2), which are each separated from each other by several screws (5, 6; 5, 8) situated parallel to each other with essentially tightly intermeshing conveying elements (6; 8), wherein at least one of the processing areas (1, 2) has at least one degassing zone with a degassing opening, and each of the processing areas (1, 2) is partially filled with the compound to be degassed, which is processed via the conveying elements of the screws (5, 6; 5, 8) adjacent to the respective processing area in each processing area (1, 2), and is conveyed through these processing areas, **characterized in that** material exchange takes place between the first processing area (1) and the second processing area (2) between the respective processing areas via at least one connecting opening (71a, ..., 71e; 91a, ..., 91e).

19. The method according to claim 13, **characterized in that** the multi-screw extruder has a first processing area and a second processing area, which is separated from the first processing area by several mutually parallel screws with essentially tightly intermeshing conveying elements.

20. The method according to claim 18 or 19, **characterized in that** the connecting opening constantly changes during the operation of the multi-screw extruder.

21. The method according to claim 20, **characterized in that** the change in the connecting opening manifests itself as the connecting opening cyclically moving back and forth in the area of the degassing zone along the longitudinal direction A.

22. The method according to claim 20 or 21, **characterized in that** the change in the connecting opening manifests itself in the expansion of the connecting opening cyclically becomes larger and smaller.

23. The method according to one of claims 18 to 22, **characterized in that** viscous or viscoelastic compound adhering to the throughput conveying element is cyclically opened so wide and fast by the rotating throughput conveying element with its connecting opening that cyclically or periodically expands and contracts that the gap is only partially filled with product.

24. The method according to claim 22 or 23, **characterized in that** the cyclic or periodic enlargement and reduction in the connecting opening takes place in such a way that the compound in the area of the connecting opening is pulled apart to form a thin film and stretched over at least a partial area of the connecting opening, and then destroyed.

25. The method according to one of claims 22 to 24, **characterized in that** the cyclic or periodic enlargement and reduction in the connecting opening takes place in such a way that the compound passes from one processing area into the other processing area in the area of the connecting opening, during which the surface of the material is cyclically enlarged and reduced.

26. The method according to claim 24 or 25, **characterized in that** the thin film is destroyed as the result of tearing the film by pulling apart the film with sufficient speed.

27. The method according to one of claims 24, 25 or 26, **characterized in that** the thin film is destroyed as the result of tearing the film by the pressure differential between the processing areas on either side of the connecting opening.

28. The method according to one of claims 18 to 27, **characterized in that** the connecting opening is a slit-like opening, and the cyclic enlargement or reduction in the connecting opening is generated by cyclically moving the opposing longer edge areas of the slit away from and toward each other.

29. The method according to one of claims 18 to 28, **characterized in that** it is implemented on a multi-screw extruder according to one of claims 1 to 12, wherein the edge areas of the at least one connecting opening are cyclically moved away from and toward each other by rotating the at least one conveying element (7; 9) with its partial throughput area (71a, ..., 71e; 91a, ..., 91e).

## Revendications

1. Extrudeuse multi-arbre, en particulier extrudeuse annulaire avec plusieurs arbres (5, 6; 5, 8) disposés parallèlement entre eux, en particulier en couronne avec des éléments d'usinage (6; 8) qui sont réalisés le long de la direction de transport axial de l'extrudeuse au moins par section comme des éléments de transport (6; 8) au moins bi-vitesse engagés étroitement avec un talon par vitesse, la chambre de processus (1, 2) de l'extrudeuse étant divisée dans ces sections par les arbres (5, 6; 5, 8) avec les éléments de transport engagés étroitement (6; 8) dans une première chambre de processus (1) et une seconde chambre de processus (2) et dans les zones de dégazage au mois la première chambre de processus (1) étant munie d'au moins une ouverture de dégazage, **caractérisée en ce que** dans au moins un élément de transport (7; 9) d'au moins un arbre réalisé comme arbre de passage (5, 7; 5, 9) dans une zone réalisé comme une zone de passage (71a, ..., 71e; 91a, ..., 91e) le long de la direction périphérique d'au moins un élément de transport (7; 9), le rayon R de l'élément de transport est inférieur de l'équivalent ΔR au rayon plein Rv de l'élément de transport (6; 8) nécessaire et servant au raclage réciproque de produits adhérents en fonctionnement engagé étroitement avec les éléments de transport voisins (6; 8) d'arbres ordinaires voisins (5, 6; 5; 8).

2. Extrudeuse multi-arbre selon la revendication 1, **caractérisée en ce que** le rayon R de l'élément de transport est dans les zones de dégazage de l'extrudeuse plus petit de l'équivalent de ΔR que le rayon plein Rv.

3. Extrudeuse multi-arbre selon la revendication 1 ou 2, **caractérisé en ce que** la zone réalisée comme zone de passage (71a, ..., 71e; 91a, ..., 91e) le long de la direction périphérique d'au moins un élément de transport (7; 9) est une zone partielle le long de la direction périphérique de cet élément de transport.

4. Extrudeuse multi-arbre selon l'une des revendications précédentes, **caractérisée en ce que** la différence de rayon ΔR de l'élément de transport est une fonction de l'angle périphérique φ le long de la direction périphérique de l'élément de transport et une fonction de l'emplacement axial x le long de la direction axiale longitudinale de l'élément de transport.

5. Extrudeuse multi-arbre selon la revendication 4, **caractérisée en ce que** la différence de rayon ΔR de l'élément de transport est une fonction de l'angle périphérique φ symétrique sur une périphérie entière (0 < φ < 360°) de l'élément de transport.

6. Extrudeuse multi-arbre selon l'une des revendications 3 à 5, **caractérisée en ce que** la zone partielle est la surface d'au moins un talon des talons (71, 72; 91, 92, 93) de l'élément de transport.

7. Extrudeuse multi-arbre selon l'une des revendications 3 à 6, **caractérisée en ce que** la zone partielle est la surface d'au moins un flanc des flancs de l'élément de transport.

8. Extrudeuse multi-arbre selon l'une des revendications 3 à 7, **caractérisée en ce que** la zone partielle est la surface d'au moins une zone de noyau des zones de noyaux de l'élément de transport.

9. Extrudeuse multi-arbre selon l'une des revendications précédentes, **caractérisée en ce que** les arbres parallèles entre eux sont en alternance des arbres de passage (5, 7; 5, 9) et des arbres ordinaires (5, 6; 5, 8).

10. Extrudeuse multi-arbre selon l'une des revendications précédentes, **caractérisée en ce que** la zone partielle présentant un rayon plus petit par rapport au rayon plein Rv, de l'élément de transport d'un arbre de passage (5, 7; 5, 9) est un talon (71; 91) de l'élément de transport (7; 9).

11. Extrudeuse multi-arbre selon l'une des revendications précédentes, **caractérisée en ce que** les zones partielles non raclables d'un arbre ordinaire (5, 6; 5, 8) au moyen de la zone partielle de passage (71a, ..., 71e; 91a, ..., 91e) d'un élément de transport (7; 9) d'un arbre de passage (5, 7; 5, 9) sont raclables par d'autres zones partielles périphériques de rayon entier du même élément de transport de l'arbre de passage.

12. Extrudeuse multi-arbre selon l'une des revendications précédentes, **caractérisée en ce que** l'extrudeuse multi-arbre est une extrudeuse annulaire avec des arbres (5) parallèles disposés en couronne en particulier en cercle, la première chambre de processus étant la chambre externe (1) et la seconde chambre de processus étant la chambre interne (2) de la chambre de processus (1, 2) de l'extrudeuse annulaire.

13. Extrudeuse multi-arbre selon l'une des revendications précédentes, **caractérisée en ce que** l'élément de transport (7; 9) est un élément de transport à n vitesses (7; 9) avec la zone partielle de passage (71a, ..., 71e; 91a, ..., 91e), le rayon respectivement d'au moins n-1 talons étant un rayon plus petit que le rayon plein Rv et le rayon d'au moins un talon est le rayon plein Rv.

14. Extrudeuse multi-arbre selon la revendication 13, **caractérisé en ce que** l'élément de transport (7; 9) avec une zone partielle de passage (71a, ..., 71e; 91a, ..., 91e) est un élément de transport bi-vitesse où le rayon du premier talon est un rayon plus petit que le rayon plein Rv et le rayon du second talon est le rayon plein Rv.

15. Extrudeuse multi-arbre selon la revendication 14, **caractérisée en ce que** des arbres de passage se suivant (5, 7; 5, 9) qui sont disposés de part et d'autres d'un arbre ordinaire (5, 6; 5, 8) intercalés entre, sont conçus de sorte que lors de leur rotation autour de leur axe longitudinal A, la zone de passage partielle respective (71a, ..., 71e; 91a, ..., 91e) d'un élément de transport est décalée dans le sens périphérique d'environ 80° par rapport à la zone partielle de passage correspondante (71a, ..., 71e; 91a, ..., 91e) de l'arbre de passage suivant selon un angle.

16. Extrudeuse multi-arbre selon l'une des revendications précédentes, **caractérisée en ce que** dans une zone de dégazage respectivement au moins dans la zone de l'ouverture de dégazage du carter d'extrudeuse, il n'est disposé aucun élément de transport de passage (7; 9), c'est-à-dire que des éléments de transport engagés étroitement (6; 8).

17. Extrudeuse multi-arbre selon l'une des revendications précédentes, **caractérisée en ce que** l'élément de transport de passage (7; 9) peut être réalisé avec la zone partielle de passage (71a, ..., 71e; 91a, ..., 91e) le long de sa direction périphérique de sorte que la masse visqueuse ou viscoélastique adhérant à l'élément de transport de passage (7, 9) peut être écartée en un fil mince par l'élément de transport de passage en rotation de manière cyclique.

18. Procédé pour le dégazage de masses visqueuses fluables ou viscoélastiques dans une extrudeuse multi-arbre avec plusieurs chambres de processus (1, 2) qui sont séparées respectivement par plusieurs arbres (5, 6; 5, 8) disposés parallèlement entre eux avec des éléments de transport sensiblement engagés étroitement entre eux, au moins l'une des chambres de processus (1, 2) présente au moins une zone de dégazage avec une ouverture de dégazage et chacune des chambres de processus (1, 2) est remplie partiellement de la masse à dégazer qui est traitée au moyen des éléments de transport des arbres (5, 6; 5, 8) limitant la chambre de processus respective, dans chaque chambre de processus (1, 2) et est acheminée à travers ces chambres de processus, **caractérisé en ce qu'**entre les chambres de processus respectives (1, 2), il se produit un échange de substance entre la première chambre de processus (1) et la seconde chambre de processus (2) par au moins une ouverture de connexion (71a, ..., 71e; 91a, ..., 91e).

19. Procédé selon la revendication 13, **caractérisé en ce que** l'extrudeuse multi-arbre présente une première chambre de processus et une seconde chambre de processus qui est séparée de la première chambre de processus par plusieurs arbres parallèles entre eux avec des éléments de transport sensiblement engagés étroitement.

20. Procédé selon la revendication 18 ou 19, **caractérisé en ce que** l'ouverture de connexion se modifie constamment pendant la fonction de l'extrudeuse multi-arbre.

21. Procédé selon la revendication 20, **caractérisé en ce que** la modification de l'ouverture de connexion réside dans le fait que l'ouverture de connexion se déplace à proximité de la zone de dégazage le long du sens longitudinal A en va et vient cycliquement.

22. Procédé selon la revendication 20 ou 21, **caractérisé en ce que** la modification de l'ouverture de connexion réside dans le faït que l'extension de l'ouverture de connexion s'agrandit ou se réduit cycliquement.

23. Procédé selon l'une des revendications 18 à 22, **caractérisé en ce que** la masse visqueuse ou viscoélastique adhérant à l'élément de transport de passage est ouverte largement et rapidement par l'élément de transport en rotation avec une ouverture de connexion s'élargissant et se réduisant cycliquement respectivement périodiquement de manière cyclique de sorte que la fente n'est rempli que partiellement de produit.

24. Procédé selon la revendication 22 ou 23, **caractérisé en ce que** l'agrandissement respectivement la réduction périodique respectivement cyclique de l'ouverture de connexion s'effectue de sorte que la masse est écartée dans la zone de l'ouverture de connexion en un film mince et est écartée sur au moins une zone partielle de l'ouverture de connexion pour être ensuite détruite.

25. Procédé selon l'une des revendications 22 à 24, **caractérisé en ce que** l'agrandissement respectivement la réduction périodique respectivement cyclique de l'ouverture de connexion s'effectue de sorte que la masse est transféré dans la zone de l'ouverture de connexion d'une chambre de processus à l'autre, la surface de la matière étant agrandie et réduite cycliquement.

26. Procédé selon la revendication 24 ou 25, **caractérisé en ce que** la destruction de la couche mince s'effectue par des fissures de film en raison de l'étirement suffisamment rapide du film.

27. Procédé selon l'une des revendications 24, 25 ou 26, **caractérisé en ce que** la destruction du film mince s'effectue par une rupture de film en raison de la différence de pression entre les chambres de processus de part et d'autres de l'ouverture de connexion.

28. Procédé selon l'une des revendications 18 à 27, **caractérisé en ce que** l'ouverture de connexion est une ouverture en forme de fente et l'agrandissement respectivement la réduction cyclique de l'ouverture de connexion sont générés dans le fait que les zones de bordure opposées les plus longues de la fente sont déplacées en s'écartant et en se rapprochant mutuellement cycliquement.

29. Procédé selon l'une des revendications 18 à 28, **caractérisé en ce qu'**il est exécuté sur une extrudeuse multi-arbre selon l'une des revendications 1 à 22, le déplacement cyclique de rapprochement et d'écartement des zones de bordure d'au moins une ouverture de connexion est provoqué par la rotation d'au moins un élément de transport (7; 9) avec une zone partielle de passage (71a, ..., 71e; 91a, ..., 91e).
